# EUROPEAN PATENT SPECIFICATION

(11) **EP 1 984 233 B1**
(45) Date of publication and mention of the grant of the patent: **03.11.2010**
(21) Application number: 07712710.8
(22) Date of filing: 12.02.2007
(51) Int. Cl.: B62D 55/253

(54) **TRACKS FOR TRACK LAYING VEHICLES AND VEHICLES CARRYING SUCH TRACKS**
GLEISKETTEN FÜR GLEISKETTENFAHRZEUGE UND SOLCHE GLEISKETTEN TRAGENDE FAHRZEUGE
CHENILLES POUR VEHICULES A CHENILLES ET VEHICULES PORTANT DE TELLES CHENILLES

(30) Priority: 13.02.2006 GB 0602833
(43) Date of publication of application: 29.10.2008
(73) Proprietor: Astrum (UK) Limited, Country Durham DL13 2YR (GB)
(72) Inventor: ROWBOTTOM, Jim, Tyne & Wear NE38 0NS (GB); GIBSON, Paul, Durham DH1 5YR (GB)
(74) Representative: Sanderson, Nigel Paul
(86) International application number: PCT/GB2007/000480
(87) International publication number: WO 2007/093773

(56) References cited:
- GB-A- 2 152 885
- US-A- 3 602 364
- US-A- 4 842 346
- US-A- 4 844 560

## Description

The present invention relates to tracks for track laying vehicles and to track laying vehicles employing such tracks. The invention relates to tracks for vehicles such as armoured fighting vehicles (tanks, armoured personnel carriers and the like), agricultural vehicles, construction vehicles and the like. In particular, the invention relates to so-called band, rubber band or continuous track systems and to joints in such track systems.

### BACKGROUND

Band track systems have been known for a number of years and in their simplest form consist of a single, continuous loop of track, primarily of rubber with suitable reinforcement, which is fitted around the carrying wheels and drive mechanism of a vehicle. This construction has significant disadvantages. In particular, because the track is formed as a single continuous loop, it is difficult to fit onto a vehicle. Typically many vehicle components must be removed before the track can be fitted and it is also necessary to raise the vehicle off the ground. A track in the form of a continuous loop is also bulky and heavy, making it difficult to handle, and the scope for introducing variants of the track for use with different vehicles is limited.

Especially in military applications, the logistical difficulties in carrying large, heavy replacement tracks which are not easy to handle manually (if they can be so handled at all) are very significant. Furthermore, tracks are subject to damage by arms fire, rough or difficult terrain, mines and so on. Failure of only a small portion of a continuous track causes effective failure of the whole track and replacement in the field may not be feasible. Where this happens, vehicles become disabled in vulnerable situations.

In order to address some of these problems, it has been suggested to form the band track as a plurality of linked sections. For example, EP 0 410 216 describes a track in which individual track sections comprise longitudinally arranged flexible endless belts encased in the rubber of the track. Lateral tension members pass through end portions of the belts. The tension members are fixedly attached to (or integral with) hinge members by which individual track sections are linked together. A track pin is passed through bores in the respective hinge members to join them together and the hinge members articulate around the track pin. US 4 842 346 A discloses a track section according to the preamble of independent claim 1.

The present invention seeks to provide an improved band track.

This is achieved through the features of the respective independent claims. Dependent claims describe preferred embodiments.

### BRIEF DESCRIPTION OF THE DRAWINGS

For a better understanding of the invention and to show how the same may be carried into effect reference will be made by way of example only to the following drawings in which:

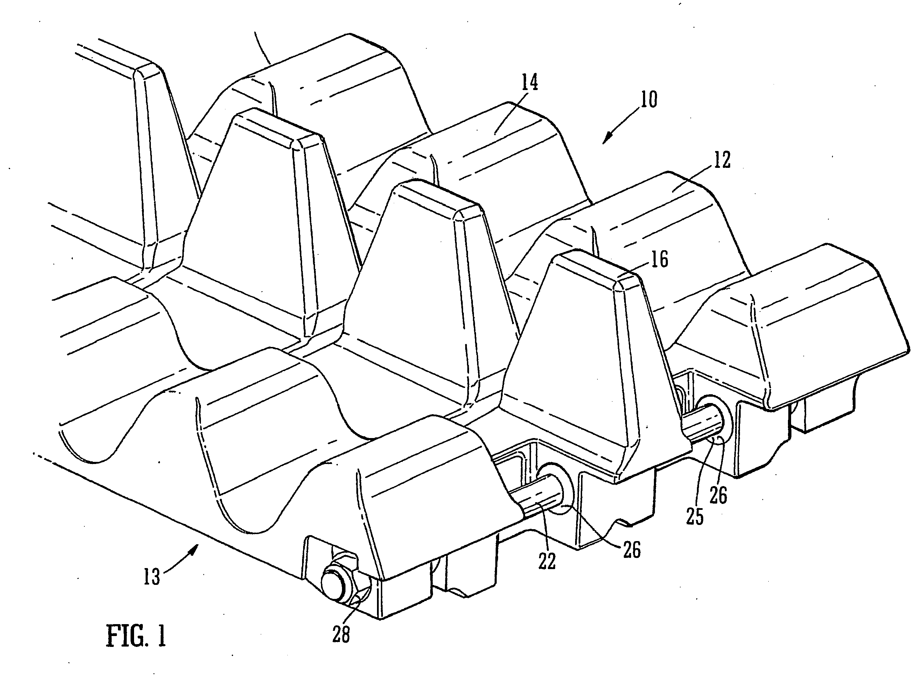

Figure 1 is a perspective view of one end of a track section according to the invention;
Figure 2A is similar to Figure 1 with part of the track section cut away;
Figure 2B is similar to Figure 2A and shows a variation in the arrangement of tension elements;
Figure 3 is a perspective view of another end of a track section according to the invention;
Figure 4A shows a track section similar to that of Figure 3, also partially cut away; and
Figure 4B is similar to Figure 4A and shows a variation in the arrangement of tension elements.

### DETAILED DESCRIPTION

Referring now to the drawings, the track section 10 according to the invention comprises an inner surface 12 and an outer surface 13. The track section 10 is constructed so that it may be connected to like track sections to form a continuous track mounted on a track laying vehicle. As will be explained below, "like" track sections need not be identical. The track laying vehicle may, for example be a construction vehicle such as an earth moving vehicle, or a military vehicle such as a tank or armoured personnel carrier. The outer surface 13 is usually provided with shaped formations which provide grip for the vehicle on a range of ground surfaces and conditions. Formations 14, 16 may also be provided on inner surface 12 to assist in retaining the track on the track laying vehicle and for transferring drive, steering and braking loads between the vehicle and the ground surface. The illustrated formations 14, 16 are merely exemplary and other types, shapes and numbers of such formations may be provided in accordance with the particular design requirements of a given vehicle. The track section 10 is primarily constructed from a rubber, synthetic rubber, rubber composite or synthetic rubber composite or rubber-like material within which most of the other components of the track section 10 are embedded.

To form the vehicle track, the track sections 10 are joined together at a joint. The joints are substantially rigid, whereas the portion of the track section 10 between the joints, which will normally form the majority of the track section 10, is relatively flexible..

Each track section 10 comprises at least one tension element 18 such that tensile loads in the track are transferred between the joints and the tension elements 18. The tension element 18 most preferably comprises a web of fabric arranged longitudinally within the track section 10 and embedded in the rubber material from which the track section 10 is formed. A plurality of tension elements 18 comprising a plurality of parallel webs of fabric may be provided. However, in a preferred arrangement a single tension element 18 is provided which comprises a web of fabric which extends laterally across the majority of, and most preferably substantially the whole of, the width of the track section 10. In alternative constructions, the tension element 18 may comprise other components able to carry a tensile load, for example longitudinally arranged wires or cables embedded within the rubber material and anchored at respective ends of the track section.

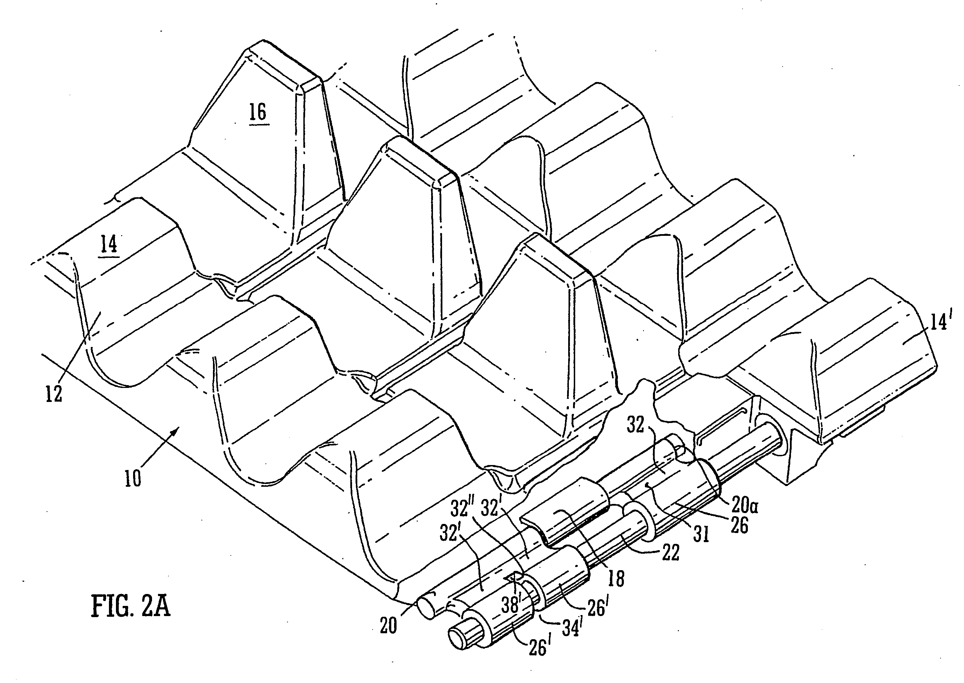

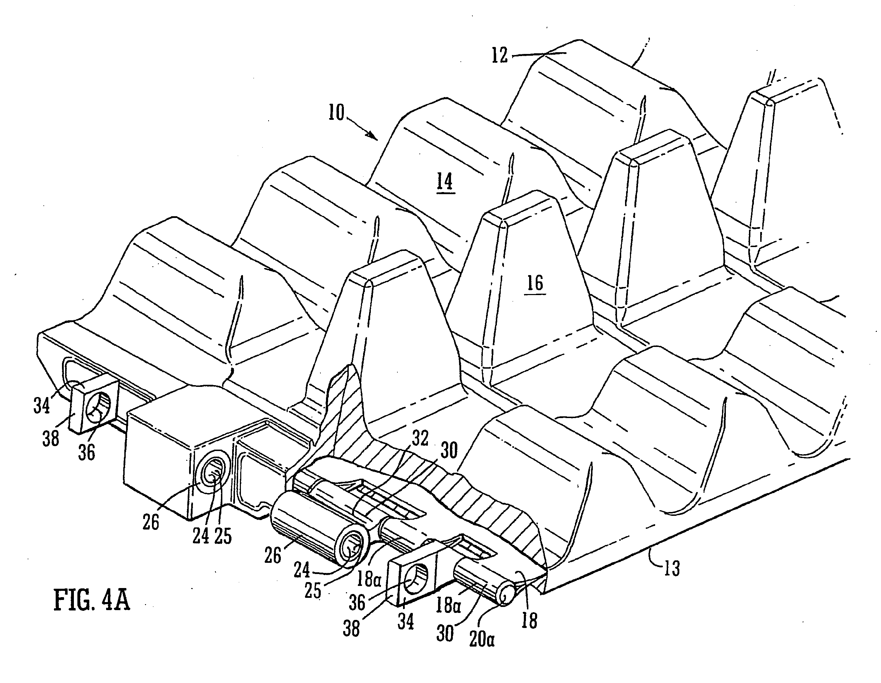

Respective ends of the track section are provided with tension element attachment formations. In the embodiment illustrated in Figures 2A and 4A, each end the track section 10 is provided with an anchor member 20 to which one or more tension elements 18 is (are) attached. The anchor member 20 is also embedded in the rubber material from which the track section 10 is formed. In one preferred embodiment as illustrated, the anchor member 20 includes portions 20a which are rod-like or bar-like. The rod-like sections are preferably cylindrical but may be other shapes, such as elliptical, square, rectangular, polygonal (e.g. hexagonal) or irregular in cross-section. The tension element(s) 18 is (are) provided with loops 18a by means of which the tension element 18 is attached to the anchor member 20 by passing around the rod like sections 20a. Thus, tensile loads in the track are transferred from the anchor members 20 to the tension elements 18. Anchor members 20 are fixedly attached to joining portions which most preferably take the form of track pin retaining elements 26.

A given track section 10 is joined to adjacent like track section by means of a suitable joint. In principle, any suitable means of joining the like track sections together may be used, provided that it is sufficiently robust and amenable to separation of the track sections when desired. A much preferred joint comprises a track pin 22 accommodated in suitable bores of the joint. The bores 24 are defined in track pin retaining elements 26 formed at each end of the track section 10. Track pin retaining elements 26 are also preferably embedded in the rubber material of the track section 10. Bores 24 may include bushings 25 which provide a seat for a track pin (see below) and may assist in preventing rotation of the joint about the track pin. The track pin retaining elements 26 are so arranged at each respective end of the track that the bores 24 are coaxial. Further the track pin retaining elements 26 are arranged in spaced apart relation, the position of the track pin retaining elements 26 being such that, when like track sections 10 are brought together, the track pin retaining elements 26 of a first of the like track sections lie within respective spaces defined between track pin retaining elements 26 of the second of the like track sections. In other words, the track pin retaining elements of the like track sections are arranged alternately within the joint. Preferably the size of the said space substantially corresponds to the axial width of the track pin retaining element 26 which it is intended to accommodate. The track pin retaining elements 26 of the first and second track sections 10 (when the track sections 10 are brought together) are so arranged that the bores 24 of the respective track sections 10 are coaxial, so allowing the track pin 22 to be disposed in the bores 24. The track sections 10 are thus joined together. The track pin 22 is secured in position by suitable fastening means which, in the illustrated embodiment is a nut 28.

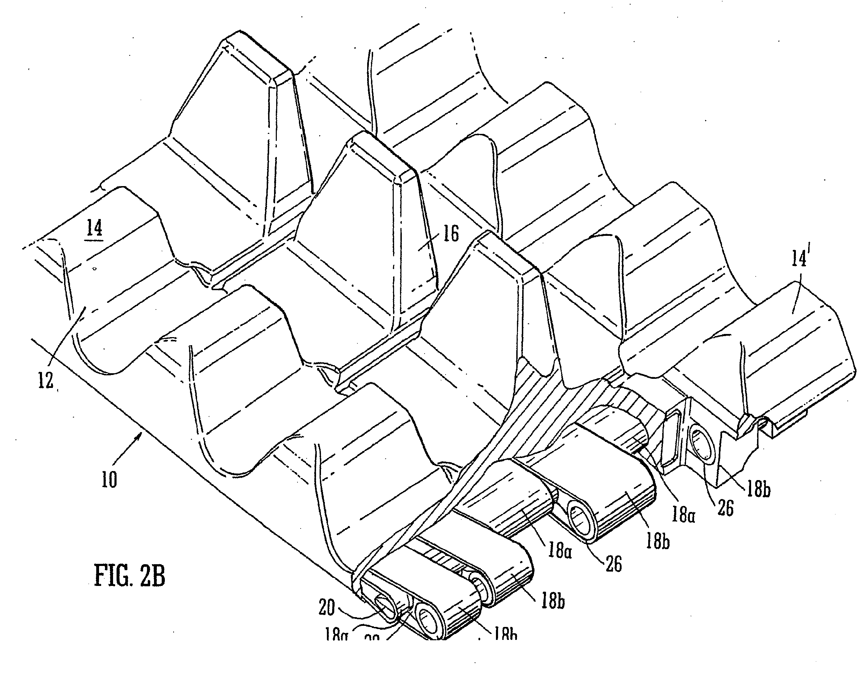

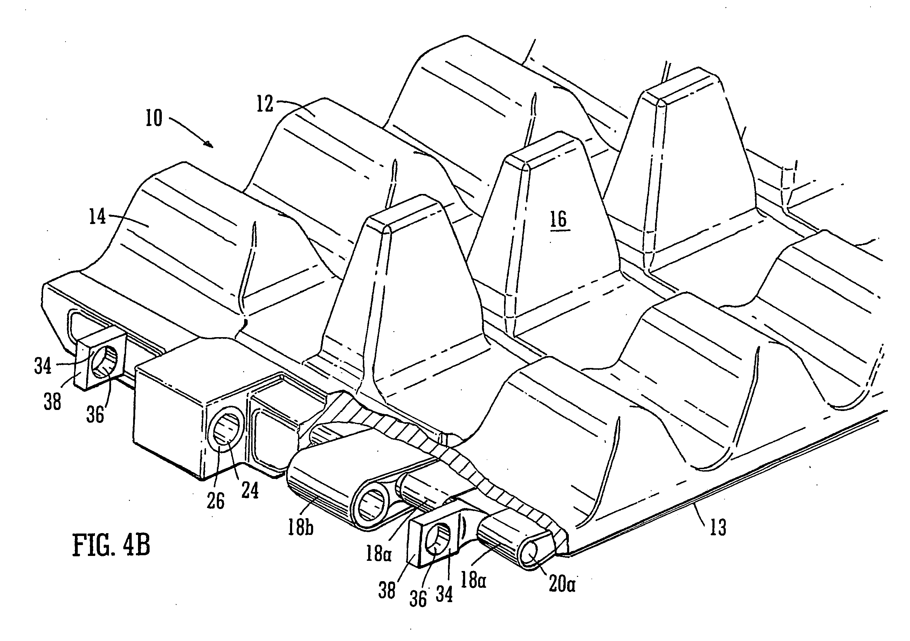

As can be seen in particular from Figures 2B and 4B, in particularly preferred forms of the invention one or more tension members 18 may be provided with loops 18b by means of which the tension element 18 is attached to a track pin retaining element 26 by passing around the track pin retaining element 26. Thus, the outer surfaces of the respective track pin retaining elements 26 form tension element retaining formations and tensile loads in the track are transferred from the track pin retaining elements 26 to the tension elements 18. In the preferred arrangement, some tension elements 18 may be attached to anchor members 20 and other tension elements 18 may be attached to track pin retaining elements 26, depending on the respective location within the track section 10 of the given tension element 18. In a particularly preferred configuration, a single tension element 18 is provided which comprises a web of fabric which extends laterally across the majority of, and most preferably substantially the whole of, the width of the track 10. End portions of the tension element are divided, e.g. cut, longitudinally into a number of parallel fingers or tongues, the width of each tongue being sized to conform to the size of a respective tension element attachment formation. The tongues, depending on their particular location, pass either around an anchor member 20 or a track pin retaining element 26.

In the most preferred forms of the invention the track pin retaining elements 26 and the anchor members 20 are formed as a single unitary body 30 or 31, preferably as a single forging of metal. Other suitably strong materials may alternatively be used. The unitary body 30 or 31 is constructed so that the rod-like portions 20a are co-linear (i.e. the principal axes of the rod like portions are aligned) and are arranged substantially in parallel with the bores of the track pin retaining elements 26. The track pin retaining elements 26 and the anchor members 18 are joined in spaced relation by connecting webs or connecting portions 32. Webs 32 may be of non-uniform thickness, typically being thicker towards track pin retaining elements 26.

Each end of the track section 10 is provided with co-operating formations of a first type or a second type. The purpose of the co-operating formations is to prevent rotation of the joined track sections 10 about the track pin 22, that is, to ensure that the joint between the track sections is substantially rigid. Various configurations of the co-operating formation are possible with regard to the track section 10. Thus an end of the track section 10 may include only co-operating formations of the first type. In this case, the end of the track section may be joined to another track section end including only co-operating formations of the second type. It follows that a track section end having only co-operating formations of the second type can be joined to a track section end having only co-operating formations of the first type. Alternatively, a given track section end may include both formations of the first type and of the second type. In this case, the given track section end may be joined to another track section end having formations of both the first and second types, arranged in complementary positions.

In the preferred construction according to the invention, a track section 10 has co-operating formations of the first type at one end and co-operating formations of the second type at its other end. In this way, all track sections 10 which are joined together to form a track may be substantially identical. However, it is also possible to construct a track from track sections 10 which are like, but not identical. Thus a first track section including only co-operating formations of the first type at both its respective ends may be joined to adjacent track sections provided that the respective adjacent track section has co-operating formations of the second type at the end to be joined. For example, in the completed track, track sections 10 having exclusively co-operating formations of the first type may alternate with track sections 10 having exclusively co-operating formations of the second type.

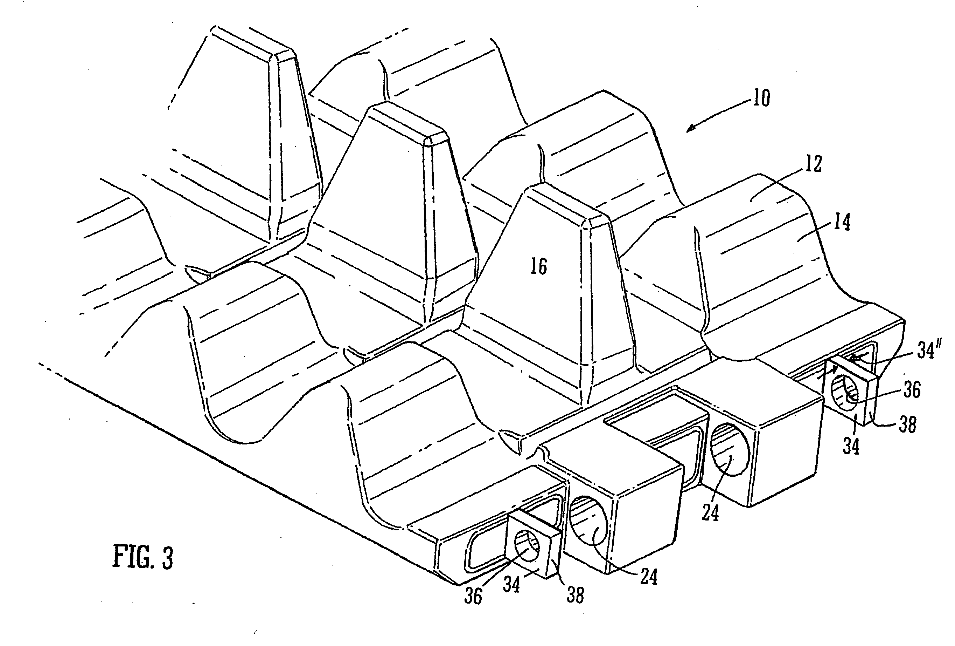

As can be seen in particular from Figures 3 and 4, one of the two types of co-operating formation (identified here for convenience as the first type) comprises a projecting finger or lug 34 which extends longitudinally forwardly of the adjacent anchor member 20. Most preferably, the projecting finger is fixedly attached to the adjacent anchor member 20. In the preferred embodiment as illustrated, the projecting finger is an integral part of the unitary body 30.

Thus, in the preferred construction as illustrated the unitary body 30 includes the co-operating formation of the first type. The unitary body 31 includes the co-operating formation of the second type. It is thus apparent that in the preferred construction as illustrated, the track section 10 includes two complementary unitary bodies 30, 31 arranged respectively at opposed ends of the track section 10.

Each projecting finger 34 includes a through bore 36 which is coaxial with the through bores 24 of the track pin receiving elements 26 of the unitary body 30. The through bore 36 also accommodates the track pin 22 when like track sections 10 are joined together. The projecting finger 34 comprises a forward substantially planar face 38 which forms an abutment surface for co-operation with the co-operating formation of the second type.

Figure 2A illustrates the co-operating formation of the second type. In figure 2A, the unitary body 31 includes two track pin receiving elements 26' which are spaced apart by a gap 34'. The gap 34' has a width which is slightly greater than the width 34" of the projecting finger 34 whereby the projecting finger 34 may be inserted into the gap 34'. The connecting web 32' by which the track pin receiving elements 26' are joined to the anchor member 20 defines a short recess 32" including a substantially planar rear face 38'. The rear face 38' forms an abutment surface which co-operates with the forward face 38 of the projecting finger 34. Thus, when the joint between adjacent track sections 10 is assembled, the faces 38, 38' are juxtaposed, that is, the faces are in confronting relation. Most preferably, the projecting finger 34 and the recess 32" are sized so that the faces 38 and 38' lie against one another. Figure 2A shows the above arrangement at the left hand side of the track section 10 as shown. It will be understood that a corresponding arrangement is provided at the other side of the track section 10, encapsulated within the area of the formation 14'.

The projecting finger 34 is shown as having a single abutment surface 38 which co-operates with a corresponding single abutment surface 38' of the recess 32". It is, however within the scope of the invention for the projecting finger 34 to include more than one abutment surface 38 and correspondingly for the recess 32" to include more than one abutment surface 38', provided only that the respective surfaces are shaped to conform and to ensure that rotation of the joined track sections 10 about the track pin 22 is substantially prevented.

Thus the invention provides track sections 10 which may easily and quickly assembled into a vehicle track, and, where required, may be easily and quickly removed from the track for repair or maintenance or replacement without the use of specialist or complex tools. By ensuring that the joint between the track sections is substantially rigid, the joint is not required to accommodate torsional loads. The resulting track is light in weight, has low noise generation and a low Radar signature. The track also generates relatively low levels of vibrations and can be used on conventional running gear (of the vehicle) with only minor modification of the vehicle.

Throughout the description and claims of this specification, the words "comprise" and "contain" and variations of the words, for example "comprising" and "comprises", means "including but not limited to", and is not intended to (and does not) exclude other moieties; additives, components, integers or steps.

Throughout the description and claims of this specification, the singular encompasses the plural unless the context otherwise requires. In particular, where the indefinite article is used, the specification is to be understood as contemplating plurality as well as singularity, unless the context requires otherwise.

Features, integers, characteristics, compounds, chemical moieties or groups described in conjunction with a particular aspect, embodiment or example of the invention are to be understood to be applicable to any other aspect, embodiment or example described herein unless incompatible therewith.

## Claims

1. A track section (10) adapted to be joined to like track sections by means of substantially rigid joints to form a track for a track laying vehicle, the track section (10) comprising:
(i) one or more first joining portions attached to the track section (10) at one end thereof and one or more second joining portions attached to the track section (10) at the other end thereof,
(ii) an intermediate relatively flexible portion comprising
(i) an inner face (12) and an outer face (13), the outer face (13) operatively contacting the ground; and
(ii) one or more tension elements (18) arranged within the track section (10) and extending longitudinally of the track section (10);
and wherein one or more tension element attachment formations are arranged proximate the respective ends of the track section, to which the or each tension element is attached whereby tensile loads are operatively transferred between the tension elements and the joining portions
. (iii) operatively co-operating formations of a first type (34, 38) or a second type (34', 38') arranged at respective ends of the track section (10) each including an abutment surface (38) which, on operatively forming said joint, is juxtaposed against a complementary abutment surface (38') of a co-operating formation of the second type (34') thereby to prevent said rotation,
wherein the respective first and second joining portions and the co-operating formations (34, 38) (34', 38') are so arranged that, when, operatively, the track section (10) is joined to an adjacent like track section:
the joining portions of the joined track sections (10) are arranged in a predetermine mutual joining configuration; and
co-operating formations (34, 38) (34', 38') of the first or second type are arranged to cooperate with respective co-operating formations (34', 38') (34, 38) of the second or first type of the adjacent like track section (10), substantially to prevent rotation of a given track section (10) end with respect to the track section end to which it is attached,
**characterised in that** the one or more joining portions comprise track pin retaining elements (26) the tension element attachment formations (20, 26) comprise one or more anchor members (20) fixedly attached to track pin retaining elements (26) at respective ends of the track section (10), and comprising rod-like portions (20a) to which the tension elements (18) are attached.

2. A track section (10) as claimed in claim 1 wherein each track pin retaining element (26) comprises a through bore (24), the track pin retaining elements (26) being so arranged that, when operatively the track section (10) is joined to an adjacent like track section, the through bores (24) of the track pin retaining elements (26) are coaxial.

3. A track section (10) adapted to be joined to like track sections by means of substantially rigid joints to form a track for a track laying vehicle, the track section (10) comprising:
(i) an intermediate relatively flexible portion comprising
(i) an Inner face and an outer face, the outer face operatively contacting the ground; and
(ii) one or more tension elements arranged within the track section and extending longitudinally of the track section;
and wherein one or more tension element attachment formations are arranged proximate the respective ends of the track section, to which the or each tension element is attached whereby tensile loads are operatively transferred between the tension elements and the joining portions.
(ii) one or more tension elements (18) arranged within the track section and extending longitudinally thereof;
(iii) first and second unitary bodies each consisting of a single forging of metal or other suitably strong material
(iii) (a) the first unitary body (30) comprising one or more first track pin retaining elements (26) attached to the track section (10) at one end thereof and one or more tension element attachment formations comprising anchor members attached to the, or each, tension element and
(iii) (b) The second unitary body (31) comprising one or more track pin retaining elements (26) attached to the track section (10) at the other end thereof, and one or more tension element attachment formations comprising anchor members attached to the, or each, tension element (18),
each track pin retaining element including a through bore (24),
(iv) operatively co-operating formations of a first type (34,) or a second type (34', ) formed on said first and second bodies (30, 31) arranged at respective ends of the track section (10) each formation (34) (34') comprising at least one abutment surface (38) (38'),
wherein the respective track pin retaining elements (26) and the co-operating formations (34, 34') are so arranged that, when, operatively, the track section (10) is joined to an adjacent like track section to form said rigid joint by insertion of a track pin (22) through said bores (24):
the, or each, abutment surface (38) (38') of co-operating formations (34) (34') of the first or second type is arranged to cooperate with a respective complementary abutment surface (38') (38) of co-operating formations (34') (34) of the second or first type of the adjacent like track section, the respective abutment surfaces (38)(38') being disposed in juxtaposition thereby substantially to prevent rotation of the track section (10) ends about the track pin (22).

4. A track section (10) as claimed in claim 3 wherein further tension element attachment formations (20, 26) comprise outer surfaces of the joining portions (26).

5. A track section (10) as claimed in claim 4 wherein the anchor members (20) comprise rod-like portions (20a) to which the tension elements (18) are attached.

6. A track section (10) as claimed in claim 1 or 5 wherein the rod-like portions (20a) are substantially co-linear.

7. A track section (10) as claimed in claim 2 or 3 wherein the rod-like portions (20a) are arranged substantially parallel to the axis of the through bore (24) of the or each track pin retaining element (26).

8. A track section (10) as claimed in claim 3 wherein the anchor members (20) are fixedly attached to adjacent track pin retaining elements (26).

9. A track section (10) as claimed in claim 1 or 8 wherein the track pin retaining elements (26) are attached to an adjacent anchor member (20) by means of one or more connecting webs (32), whereby the track pin retaining elements (26) and the anchor members (20) are arranged in spaced apart relation.

10. A track section (10) as claimed in claim 1 wherein the formation of the first type (34, 38) is fixedly attached to an adjacent anchor member (20).

11. A track section (10) as claimed in claim 1 or 3 wherein the formation of the first type (34, 38) is formed integrally with an adjacent anchor member (20).

12. A track section (10) as claimed in claim 1 wherein each respective end of the track section (10) comprises a unitary body (30, 31) which body (30, 31) includes both the anchor member (20) and the joining portions.

13. A track section (10) as claimed in claim 1 or 3 wherein the co-operating formation of the first type (34) comprises a longitudinally projecting finger (34).

14. A track section (10) as claimed in claim 2 or 3 wherein the co-operating formation of the first type (34) includes a through bore (36) which is coaxial with the through bore (24) of the track pin retaining elements (26) and is sized operatively to accommodate a track pin (22).

15. A track for a track laying vehicle comprising a plurality of conjoined track sections (10) as claimed in any preceding claim.

16. A vehicle having a track comprising track sections (10) as claimed in any of claims 1 to 14.

## Patentansprüche

1. Ein Gleiskettenabschnitt (10), der angepasst ist, um mit gleichen Gleiskettenabschnitten mittels im Wesentlichen starrer Verbindungsstücke verbunden zu werden, um eine Gleiskette für ein Gleisketten-tragendes Fahrzeug zu bilden, der Gleiskettenabschnitt (10) umfassend:
(i) ein oder mehrere Verbindungsteile, die an dem Gleiskettenabschnitt (10) an einem seiner Enden angefügt sind, und ein oder mehrere zweite Verbindungsteile, die an dem Gleiskettenabschnitt (10) an seinem anderen Ende angefügt sind,
(ii) einen dazwischen liegenden relativ biegsamen Teil, umfassend:
(i) eine Innenseite (12) und eine Außenseite (13), wobei die Außenseite (13) in Betrieb mit dem Boden in Kontakt tritt; und
(ii) ein oder mehrere Zugspannungselemente (18), die in dem Gleiskettenabschnitt (10) angeordnet sind, und sich längs des Gleiskettenabschnitts (10) erstrecken;
und wobei eine oder mehrere Ausbildungen zum Anfügen von Zugspannungselementen nahe der jeweiligen Enden des Gleiskettenabschnitts angeordnet sind, an die das oder jedes der Zugspannungselemente angefügt ist, wodurch Zugbelastungen zwischen den Zugspannungselementen und den Verbindungsteilen in Betrieb übertragen werden;
(iii) in Betrieb kooperierende Ausbildungen eines ersten Typs (34, 38) oder eines zweiten Typs (34', 38'), die an den jeweiligen Enden des Gleiskettenabschnitts (10) angeordnet sind, jede eine Anlageoberfläche (38) einschließend, welche beim Bilden der Verbindung im Betrieb einer komplementären Anlageoberfläche (38') einer kooperierenden Ausbildung des zweiten Typs (34') beigestellt wird, um **dadurch** die Rotation zu verhindern,
wobei die ersten und zweiten Verbindungsteile und die kooperierenden Ausbildungen (34, 38) (34', 38') so angeordnet sind, dass der Gleiskettenabschnitt (10) in Betrieb mit einem angrenzenden gleichen Gleiskettenabschnitt verbunden ist:
Die Verbindungsteile der verbundenen Gleiskettenabschnitte (10) sind in einer vorbestimmten gegenseitigen Verbindungsposition angeordnet; und
kooperierende Ausbildungen (34, 38) (34', 38') des ersten und zweiten Typs sind angeordnet, um mit den jeweiligen kooperierenden Ausbildungen (34', 38') (34, 38) des zweiten oder ersten Typs eines angrenzenden Gleiskettenabschnitts (10) zu kooperieren, im Wesentlichen, um die Drehung eines gegebenen Endes eines angrenzenden Gleiskettenabschnitts (10) in Bezug zu dem Ende eines Gleiskettenabschnitts (10), mit dem es verbunden ist, zu verhindern, **dadurch gekennzeichnet, dass** der eine oder die mehreren Verbindungsteile Gleiskettenbolzen-haltende Elemente (26) umfasst/umfassen,
**dadurch gekennzeichnet, dass** das eine oder die mehreren Verbindungsteile Gleiskettenbolzen-haltende Elemente (26) umfassen, wobei die Ausbildungen zum Anbringen von Zugspannungselementen (20, 26) eine oder mehrere Ankerglieder (20) umfassen, die fest mit Gleiskettenbolzen-haltenden Elementen (26) an den jeweiligen Enden des Gleiskettenabschnitts (10) verbunden sind, und umfassend stabartige Teile (20a), an denen Zugspannungselemente (18) angebracht sind.

2. Ein Gleiskettenabschnitt (10) wie in Anspruch 1 beansprucht, wobei jedes Gleiskettenbolzen-haltende Element (26) eine Durchbohrung (24) umfasst, wobei die Gleiskettenbolzen-haltende Elemente (26) so angeordnet sind, dass die Durchbohrungen (24) der Gleiskettenbolzen-haltende Elemente (26) koaxial sind, wenn der Gleiskettenabschnitt (10) in Betrieb mit einem angrenzenden Gleiskettenabschnitt verbunden ist, umfassend Ankerglieder.

3. Ein Gleiskettenabschnitt (10), der angepasst ist, um an gleiche Gleiskettenabschnitte mittels im Wesentlichen starrer Verbindungen verbunden zu werden, um eine Gleiskette für ein Gleiskettenfahrzeug zu bilden, der Gleiskettenabschnitt (10) umfassend:
(i) einen dazwischen liegenden relativ biegsamen Teil, umfassend:
(i) eine Innenseite und eine Außenseite, wobei die Außenseite in Betrieb mit dem Boden in Kontakt tritt; und
(ii) ein oder mehrere Zugspannungselemente, die in dem Gleiskettenabschnitt angeordnet sind, und sich längs des Gleiskettenabschnitts erstrecken;
und wobei ein oder mehrere Formationen zum Anfügen von Zugspannungselementen nahe der jeweiligen Enden des Gleiskettenabschnitts angeordnet sind, and die das oder jedes der Zugspannungselemente angefügt ist, wodurch Zugbelastungen zwischen den Zugspannungselementen und den Verbindungsteilen in Betrieb übertragen werden;
(ii) ein oder mehrere Zugspannungselemente (18), die in dem Gleiskettenabschnitt angeordnet sind, und sich längs des Gleiskettenabschnitts erstrecken;
(iii) erste und zweite einheitliche Körper, jeder bestehend aus einem einzigen Schmiedestück aus Metal oder einem anderen angemessen starken Material,
(iii) (a) der erste einheitliche Körper (30) umfassend ein oder mehrere mit dem Gleiskettenabschnitt (10) an dessen einem Ende verbundene Gleiskettenbolzen-haltende Elemente (26) und ein oder mehrere Ausbildungen zum Anbringen von Zugspannungselementen umfassend Ankerglieder, die mit dem oder jedem der Zugspannungselemente verbunden sind, und
(iii) (b) der zweite einheitliche Körper (31) umfassend ein oder mehrere mit dem Gleiskettenabschnitt (10) an dessen anderem Ende verbundene Gleiskettenbolzen-haltende Elemente (26), und eine oder mehrere Ausbildungen zum Anbringen von Zugspannungselementen, umfassend Ankerglieder, die mit dem oder jedem der Zugspannungselemente (18) verbunden sind,
wobei jedes Gleiskettenbolzen-haltende Element eine Durchbohrung (24) einschließt,
(iv) in Betrieb kooperierende Ausbildungen eines ersten Typs (34), oder eines zweiten Typs (34'), die auf den ersten und zweiten Körpern (30, 31) ausgebildet und an den jeweiligen Enden des Gleiskettenabschnitts (10) angeordnet sind, jede Ausbildung (34) (34') umfassend wenigstens eine Anlageoberfläche (38) (38'),
wobei die Gleiskettenbolzen-haltende Elemente (26) und die kooperierenden Ausbildungen (34, 34') so angeordnet sind, dass wenn der Gleiskettenabschnitt (10) in Betrieb mit einem angrenzenden Gleiskettenabschnitt verbunden ist, um die starre Verbindung durch Einführen eines Gleiskettenbolzens (22) durch die Durchbohrung (24) auszubilden:
die, oder jede, Anlageoberfläche (38) (38') kooperierender Ausbildungen (34) (34') des ersten oder zweiten Typs angeordnet ist, um mit einer entsprechenden komplementären Anlageoberfläche (38) (38') kooperierender Ausbildungen (34) (34') des zweiten oder ersten Typs des angrenzenden gleichen Gleiskettenabschnitts kooperieren, wobei die jeweiligen Anlageoberflächen (38) (38') nebeneinander angeordnet werden, im Wesentlichen um **dadurch** die Drehung der Enden des Gleiskettenabschnitts (10) über den Gleiskettenbolzen (22) zu verhindern.

4. Ein Gleiskettenabschnitt (10) wie in Anspruch 3 beansprucht, wobei weitere Ausbildungen zum Anbringen von Zugspannungselementen (20, 26) äußere Oberflächen der Verbindungsteile (26) umfassen.

5. Ein Gleiskettenabschnitt (10) wie in Anspruch 4 beansprucht, wobei die Ankerglieder (20) stabartige Teile (20a) umfassen, mit denen Zugspannungselemente (18) verbunden sind.

6. Ein Gleiskettenabschnitt (10) wie in Anspruch 1 oder 5 beansprucht, wobei die stabartigen Teile (20a) im Wesentlichen kolinear sind.

7. Ein Gleiskettenabschnitt (10) wie in Anspruch 2 oder 3 beansprucht, wobei die stabartigen Teile (20a) im Wesentlichen parallel zu der Achse der Durchbohrung (24) des oder jedes Gleiskettenbolzen-haltenden Elements (26) angeordnet sind.

8. Ein Gleiskettenabschnitt (10) wie in Anspruch 3 beansprucht, wobei die Ankerglieder (20) starr mit den angrenzenden Gleiskettenbolzen-haltenden Elementen (26) verbunden sind.

9. Ein Gleiskettenabschnitt (10) wie in Anspruch 1 oder 8 beansprucht, wobei die Gleiskettenbolzen-haltenden Elemente (26) mittels eines oder mehrerer verbindender Netze (32) mit einem benachbarten Ankerglied (20) verbunden sind, wobei die Gleiskettenbolzen-haltenden Elemente (26) und die Ankerglieder (20) mit Abstand zueinander angeordnet sind.

10. Ein Gleiskettenabschnitt (10) wie in Anspruch 1 beansprucht, wobei die Ausbildung des ersten Typs (34, 38) starr mit einem angrenzenden Ankerglied (20) verbunden ist.

11. Ein Gleiskettenabschnitt (10) wie in Anspruch 1 oder 3 beansprucht, wobei die Ausbildung des ersten Typs (34, 38) integral mit dem angrenzenden Ankerglied (20) ausgebildet ist.

12. Ein Gleiskettenabschnitt (10) wie in Anspruch 1 beansprucht, wobei jedes Ende des Gleiskettenabschnitts (10) einen einheitlichen Körper (30, 31) umfasst, der sowohl das Ankerglied (20) als auch die Verbindungsstücke umfasst.

13. Ein Gleiskettenabschnitt (10) wie in Anspruch 1 oder 3 beansprucht, wobei die kooperierende Ausbildung des ersten Typs (34) einen in Längsrichtung vorstehenden Finger (34) umfasst.

14. Ein Gleiskettenabschnitt (10) wie in Anspruch 2 beansprucht, wobei die kooperierende Ausbildung des ersten Typs (34) eine Durchbohrung (36) einschließt, die koaxial mit der Durchbohrung (24) des Gleiskettenbolzen-haltenden Elements (26) ist, und die bemessen ist, um in Betrieb einen Gleiskettenbolzen (22) aufzunehmen.

15. Eine Gleiskette für ein Gleiskettenfahrzeug, umfassend eine Vielzahl verbundener, wie in einem der vorstehenden Ansprüche beanspruchten, Gleiskettenabschnitte (10).

16. Ein Fahrzeug, das eine Gleiskette hat, welche Gleiskettenabschnitte (10) wie in einem der vorstehenden Ansprüche 1 bis 14 beansprucht umfasst.

## Revendications

1. Section de chenille (10) apte à être reliée à des sections de chenilles identiques au moyen de joints sensiblement rigides pour former une chenille pour un véhicule à chenilles, la section de chenille (10) comprenant :
(i) une ou plusieurs premières parties de liaison fixées à la section de chenille (10) à une extrémité de celle-ci et une ou plusieurs secondes parties de liaison fixées à la section de chenille (10) à l'autre extrémité de celle-ci,
(ii) une partie intermédiaire relativement souple comprenant :
(i) une face interne (12) et une face externe (13), la face externe (13) étant en contact fonctionnel avec le sol ; et
(ii) un ou plusieurs éléments de tension (18) disposés à l'intérieur de la section de chenille (10) et s'étendant longitudinalement par rapport à la section de chenille (10) ;
et une ou plusieurs formations de fixation d'élément de tension étant disposées à proximité des extrémités respectives de la section de chenille, auxquelles le ou chaque élément de tension est fixé, ce par quoi des charges de traction sont transférées de manière fonctionnelle entre les éléments de tension et les parties de liaison,
(iii) des formations de coopération fonctionnelle d'un premier type (34, 38) ou d'un second type (34', 38') disposées à des extrémités respectives de la section de chenille (10), comprenant chacune une surface de butée (38) qui, lors de la formation fonctionnelle dudit joint, est juxtaposée contre une surface de butée complémentaire (38') d'une formation de coopération du second type (34') pour empêcher ainsi ladite rotation ;
les première et seconde parties de liaison respectives et les formations de coopération (34, 38)(34', 38') étant agencées de telle sorte que, lorsque la section de chenille (10) est reliée, fonctionnellement, à une section de chenille identique adjacente :
- les parties de liaison des sections de chenilles reliées (10) sont disposées dans une configuration de liaison mutuelle prédéterminée ; et
- les formations de coopération (34, 38)(34', 38') du premier ou du second type sont disposées pour coopérer avec les formations de coopération respectives (34', 38')(34, 38) du second ou du premier type de la section de chenille identique adjacente (10), pour empêcher sensiblement la rotation d'une extrémité de section de chenille donnée (10) par rapport à l'extrémité de section de chenille à laquelle elle est fixée,
**caractérisée par le fait que** la ou les parties de liaison comprennent des éléments de retenue d'axe d'articulation de chenille (26), les formations de fixation d'élément de tension (20, 26) comprennent un ou plusieurs éléments d'ancrage (20) fixés de manière fixe aux éléments de retenue d'axe d'articulation de chenille (26) à des extrémités respectives de la section de chenille (10), et comprenant des parties de type tige (20a) auxquelles les éléments de tension (18) sont fixés.

2. Section de chenille (10) selon la revendication 1, dans laquelle chaque élément de retenue d'axe d'articulation de chenille (26) comprend un trou traversant (24), les éléments de retenue d'axe d'articulation de chenille (26) étant agencés de telle sorte que, lorsque la section de chenille (10) est reliée, fonctionnellement, à une section de chenille identique adjacente, les trous traversants (24) des éléments de retenue d'axe d'articulation de chenille (26) sont coaxiaux.

3. Section de chenille (10) apte à être reliée à des sections de chenilles identiques au moyen de joints sensiblement rigides pour former une chenille pour un véhicule à chenilles, la section de chenille (10) comprenant :
(i) une partie intermédiaire relativement souple comprenant :
(i) une face interne et une face externe, la face externe étant en contact fonctionnel avec le sol ; et
(ii) un ou plusieurs éléments de tension disposés à l'intérieur de la section de chenille et s'étendant longitudinalement par rapport à la section de chenille ;
et une ou plusieurs formations de fixation d'élément de tension étant disposées à proximité des extrémités respectives de la section de chenille, à laquelle le ou chaque élément de tension est fixé, ce par quoi des charges de traction sont transférées de manière fonctionnelle entre les éléments de tension et les parties de liaison ;
(ii) un ou plusieurs éléments de tension (18) disposés à l'intérieur de la section de chenille et s'étendant longitudinalement par rapport à celle-ci ;
(iii) des premier et second corps unitaires constitués chacun par une unique pièce forgée de métal ou d'un autre matériau résistant approprié ;
(iii)(a) le premier corps unitaire (30) comprenant un ou plusieurs éléments de retenue d'axe d'articulation de chenille (26) fixés à la section de chenille (10) à une extrémité de celle-ci et une ou plusieurs formations de fixation d'élément de tension comprenant des éléments d'ancrage fixés au ou à chaque élément de tension et
(iii)(b) le second corps unitaire (31) comprenant un ou plusieurs éléments de retenue d'axe d'articulation de chenille (26) fixés à la section de chenille (10) à l'autre extrémité de celle-ci, et une ou plusieurs formations de fixation d'élément de tension comprenant des éléments d'ancrage fixés au ou à chaque élément de tension (18),
chaque élément de retenue d'axe d'articulation de chenille comprenant un trou traversant (24) ;
(iv) des formations de coopération fonctionnelle d'un premier type (34) ou d'un second type (34') formées sur lesdits premier et second corps (30, 31) disposés à des extrémités respectives de la section de chenille (10), chaque formation (34)(34') comprenant au moins une surface de butée (38)(38'),
les éléments de retenue d'axe d'articulation de chenille respectifs (26) et les formations de coopération (34, 34') étant agencés de telle sorte que, lorsque la section de chenille (10) est reliée, fonctionnellement, à une section de chenille identique adjacente pour former ledit joint rigide par introduction d'un axe d'articulation de chenille (22) à travers lesdits trous (24) :
- la ou chaque surface de butée (38)(38') des formations de coopération (34)(34') du premier ou du second type est disposée pour coopérer avec une surface de butée complémentaire respective (38')(38) de formations de coopération (34')(34) du second ou du premier type de la section de chenille identique adjacente, les surfaces de butée respectives (38)(38') étant disposées en juxtaposition pour de cette façon empêcher sensiblement la rotation des extrémités de section de chenille (10) autour de l'axe d'articulation de chenille (22).

4. Section de chenille (10) selon la revendication 3, dans laquelle d'autres formations de fixation d'élément de tension (20, 26) comprennent des surfaces externes des parties de liaison (26).

5. Section de chenille (10) selon la revendication 4, dans laquelle les éléments d'ancrage (20) comprennent des parties de type tige (20a) auxquelles les éléments de tension (18) sont fixés.

6. Section de chenille (10) selon l'une des revendications 1 ou 5, dans laquelle les parties de type tige (20a) sont sensiblement colinéaires.

7. Section de chenille (10) selon l'une des revendications 2 ou 3, dans laquelle les parties de type tige (20a) sont disposées sensiblement parallèlement à l'axe du trou traversant (24) du ou de chaque élément de retenue d'axe d'articulation de chenille (26).

8. Section de chenille (10) selon la revendication 3, dans laquelle les éléments d'ancrage (20) sont fixés de manière fixe à des éléments de retenue d'axe d'articulation de chenille adjacents (26).

9. Section de chenille (10) selon l'une des revendications 1 ou 8, dans laquelle les éléments de retenue d'axe d'articulation de chenille (26) sont fixés à un élément d'ancrage adjacent (20) au moyen d'une ou plusieurs bandes de liaison (32), ce par quoi les éléments de retenue d'axe d'articulation de chenille (26) et les éléments d'ancrage (20) sont disposés dans une relation espacée les uns des autres.

10. Section de chenille (10) selon la revendication 1, dans laquelle la formation du premier type (34, 38) est fixée de manière fixe à un élément d'ancrage adjacent (20).

11. Section de chenille (10) selon l'une des revendications 1 ou 3, dans laquelle la formation du premier type (34, 38) est formée d'un seul tenant avec un élément d'ancrage adjacent (20).

12. Section de chenille (10) selon la revendication 1, dans laquelle chaque extrémité respective de la section de chenille (10) comprend un corps unitaire (30, 31), lequel corps (30, 31) comprend à la fois l'élément d'ancrage (20) et les parties de liaison.

13. Section de chenille (10) selon l'une des revendications 1 ou 3, dans laquelle la formation de coopération du premier type (34) comprend un doigt faisant saillie longitudinalement (34).

14. Section de chenille (10) selon l'une des revendications 2 ou 3, dans laquelle la formation de coopération du premier type (34) comprend un trou traversant (36) qui est coaxial au trou traversant (24) des éléments de retenue d'axe d'articulation de chenille (26) et est dimensionnée pour recevoir de manière fonctionnelle un axe d'articulation de chenille (22).

15. Chenille pour véhicule à chenilles, comprenant une pluralité de sections de chenille conjointes (10) telles que définies à l'une quelconque des revendications précédentes.

16. Véhicule ayant une chenille comprenant des sections de chenilles (10) telles que définies à l'une quelconque des revendications 1 à 14.
